# EUROPÄISCHE PATENTSCHRIFT

(11) **EP 0 514 336 B1**
(45) Veröffentlichungstag und Bekanntmachung des Hinweises auf die Patenterteilung: **11.12.1996**
(21) Anmeldenummer: 92810342.3
(22) Anmeldetag: 08.05.1992
(51) Int. Cl.: C09B 67/00, C09B 69/06

(54) **Verfahren zur Herstellung hochkonzentrierter wässriger Lösungen von kationischen Azofarbstoffen**
Process for the manufacture of high-concentrated aqueous solutions of cationic azodyes
Procédé de préparation de solutions aqueuses hautement concentrées de colorants azoiques cationiques

(30) Priorität: 17.05.1991 CH 1474/91
(43) Veröffentlichungstag der Anmeldung: 19.11.1992
(73) Patentinhaber: CIBA-GEIGY AG, 4002 Basel (CH)
(72) Erfinder: Nicopoulos, Alex, CH-4052 Basel (CH); Birri, Hanspeter, CH-4133 Pratteln (CH); Hanika, Gerhard, Dr., W-7850 Lörrach (DE)

(56) Entgegenhaltungen:
- EP-A- 0 012 053
- EP-A- 0 046 237
- EP-A- 0 056 578
- DE-A- 1 794 368
- GB-A- 1 295 825
- CHEMICAL ABSTRACTS, vol. 98, no. 18, 1983, Columbus, Ohio, US; abstract no. 145027X, WROBLEWSKI ET. AL.: 'Concentrated solutions of cationic monoazodyes' Seite 87 ;Spalte 2 ;
- Anorganikum, 4. Aufl. 1972, Seite 426
- Christen "Einführung in die Chemie", Otto Salle Verlag (1966), Seite 138

## Beschreibung

Die vorliegende Erfindung betrifft ein neues Verfahren zur Herstellung hochkonzentrierter wässriger Lösungen von Salzen kationischer Azofarbstoffe.

Aus der DE-A-1 644 389 ist bereits ein Verfahren zur Herstellung von Salzen kationischer Farbstoffe bekannt, welches darin besteht, dass man ein in Wasser lösliches Bicarbonat auf ein in Wasser lösliches Salz eines kationischen Farbstoffs einwirken lässt und gegebenenfalls alsdann die so erhaltenen Bicarbonate der Einwirkung einer Mineralsäure oder organischen Säure unterwirft. Als geeignete Farbstoffe werden die von den Indazol-und Benzimidazolreihen abstammenden Farbstoffe erwähnt. Diese Farbstoffe werden gemäss sämtlichen Beispielen als Chloride eingesetzt.

Nach der Umwandlung in die Farbstoff-Bicarbonate gemäss dieser DE-A-1 644 389 ist es nicht möglich, die Chloride vollständig zu entfernen. Auch nach Umsetzung mit einer organischen Säure enthalten die erhaltenen Farbstofflösungen daher immer noch Restmengen an Chloriden, was in Aufbewahrungsgefässen und/oder Färbeapparaturen zur Korrosion führen kann. Ausserdem gibt es bei einigen Farbstoffen beim Lagern bei niedriger Temperatur (ca. 0-5°C) Probleme, da aus chloridhaltigen Lösungen der Farbstoff teilweise auskristallisiert.

Es wurde nun gefunden, dass man bei spezifischen Azofarbstoffen diese Probleme umgehen kann, wenn man die Diazotierung in schwefelsaurer Lösung durchführt und nach der Kupplung den Farbstoff als Sulfat oder Hydrogensulfat ausfällt. Ueberraschenderweise fällt der Farbstoff dabei in einer Form an, die sich sehr gut filtrieren und auswaschen lässt, so dass man den Farbstoff praktisch chloridfrei erhält, auch wenn man eine chloridhaltige Kupplungskomponente eingesetzt hat.

Gegenstand der vorliegenden Erfindung ist somit ein Verfahren zur Herstellung hochkonzentrierter wässriger Lösungen von Salzen kationischer Azofarbstoffe, welches dadurch gekennzeichnet ist, dass man
a) ein Amin der Formel

   D-NH₂ (1)

   worin D einen gegebenenfalls substituierten Benzol-, Thiazol-, Benzthiazol- oder Thiadiazolrest bedeutet, in schwefelsaurer Lösung diazotiert, danach
b) mit einer Kupplungskomponente der Formel 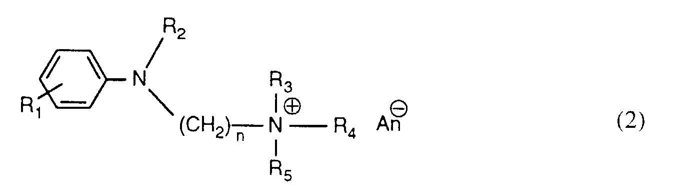 worin
   R₁ Wasserstoff, C₁-C₄-Alkyl, C₁-C₄-Alkoxy, Halogen oder C₁-C₄-Alkanoylamino,
   R₂ Wasserstoff oder C₁-C₄-Alkyl,
   n eine ganze Zahl 2 bis 6,
   R₃, R₄ und R₅ unabhängig voneinander gegebenenfalls substituiertes Alkyl oder R₃ und R₄ zusammen mit dem sie verbindenden Stickstoffatom oder R₃, R₄ und R₅ zusammen mit dem sie verbindenden Stickstoffatom einen heterocyclischen Rest, oder R₃ und R₄ je C₁-C₄-Alkyl und R₅ Amino und An^{⊖} ein Anion bedeutet, kuppelt, anschliessend
c) auf den entstandenen Azofarbstoff ein in Wasser lösliches Bicarbonat einwirken lässt und
d) das Farbstoff-Bicarbonat mit einer organischen Säure in das Farbstoff-Salz dieser Säure umwandelt.

Bei den Aminen der Formel (1) handelt es sich vorzugsweise um Aniline der Formel 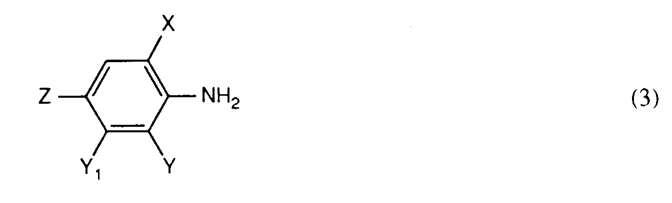 worin
X Wasserstoff, Halogen, Cyan oder Nitro,
Y und Y₁ unabhängig voneinander je Wasserstoff oder Halogen und
Z Nitro, C₁-C₄-Alkylsulfon oder N,N-Di-C₁-C₄-Alkylsulfonamid bedeutet,
oder um Thiazole der Formel 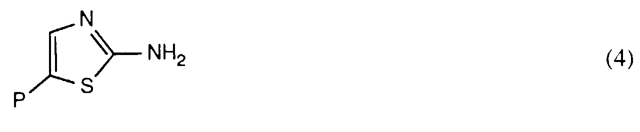 worin P Wasserstoff oder Nitro bedeutet,
oder Benzthiazole der Formel 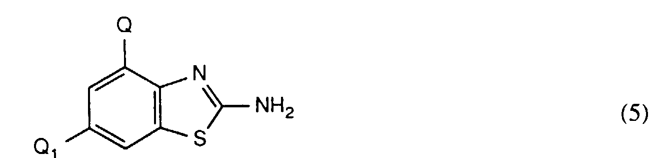 worin Q und Q₁ unabhängig voneinander je Wasserstoff, Halogen oder Nitro bedeuten,
oder um Thiadiazole der Formel 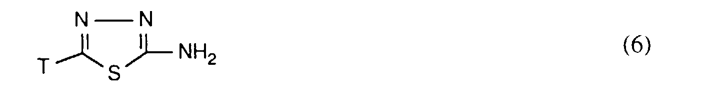 oder 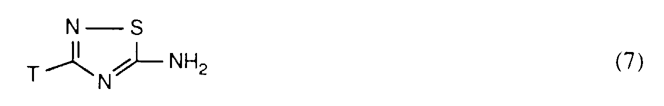 worin T Wasserstoff oder gegebenenfalls substituiertes Phenyl bedeutet.

Unter diesen sind die Amine der Formel 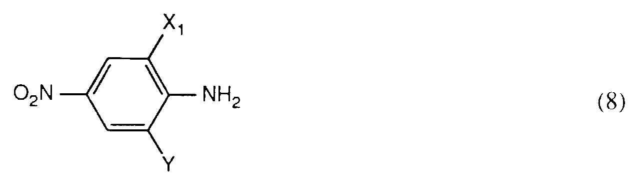 worin
X₁ Wasserstoff, Halogen oder Cyan und
Y Wasserstoff oder Halogen bedeuten, besonders bevorzugt.

Unter Halogen ist Fluor, Brom oder vor allem Chlor zu verstehen.

R₁ und R₂ als Alkyl bedeuten Methyl, Ethyl, n- oder iso-Propyl, n-, iso-, sec- oder tert.-Butyl und als Alkoxy bedeutet R₁ Methoxy, Ethoxy, n-Propoxy, iso-Propoxy, n-Butoxy, iso-Butoxy, sec-Butoxy oder tert.-Butoxy.
R₁ kann auch C₁-C₄-Alkanoylamino bedeuten, z.B. Acetylamino, Propionylamino, Butyrylamino, Isobutyrylamino, Valerylamino oder Isovalerylamino.

R₃, R₄ und R₅ stellen unabhängig voneinander je einen gegebenenfalls substituierten Alkylrest dar. Als gegebenenfalls substituierte Alkylreste kommen in dieser Anmeldung generell beispielsweise Methyl, Ethyl, n- oder iso-Propyl, n-, iso-, sec- oder tert.-Butyl, geradkettiges oder verzweigtes Pentyl oder Hexyl, Cyclopentyl oder Cyclohexyl in Frage, wobei diese Reste substituiert sein können, z.B. durch Hydroxy, Alkoxy, Cyano, Carbonamido oder am N-Atom mono- oder dialkyliertes Carbonamido, oder Phenyl, welches gegebenenfalls weitersubstituiert ist, z.B. durch Alkyl oder Alkoxy.

Beispiele für solche substituierten Reste sind Hydroxymethyl, Hydroxyetyhl, 2-Hydroxypropyl-1, Methoxyethyl, Ethoxyethyl, Propoxypropyl, Benzyl, Cyanethyl oder Carbonamidoethyl.

R₃ und R₄ können auch zusammen mit dem sie verbindenden Stickstoffatom einen heterocyclischen Rest darstellen, beispielsweise einen Pyrrolidin-, Piperidin-, Morpholin- oder Piperazinrest, oder R₃, R₄ und R₅ bilden zusammen mit dem sie verbindenden Stickstoffatom einen heterocyclischen Rest, z.B. einen Pyridinium-, Imidazolium- oder monoquaternierten Triethylendiaminrest, wobei diese Reste substituiert sein können, z.B. durch C₁-C₄-Alkyl.

Vorzugsweise bedeutet Y Wasserstoff und X Wasserstoff, Cyan oder vor allem Chlor.

R₁ ist vorzugsweise Wasserstoff, Methyl oder Chlor, vor allem Chlor in o-Stellung oder Methyl in m-Stellung zur substituierten Aminogruppe und n ist vorzugsweise 2 oder 3.

Die bevorzugten Bedeutungen von R₂ sind Wasserstoff, Methyl und vor allem Ethyl.

R₃ und R₄ bedeuten bevorzugt je Methyl und R₅ Methyl, Hydroxy-C₁-C₃-Alkyl, Benzyl oder Amino oder R₃, R₄ und R₅ bilden zusammen mit dem sie verbindenden Stickstoffatom einen unsubstituierten oder durch Methyl substituierten Pyridiniumrest.

Das erfindungsgemässe Verfahren ist insbesondere geeignet für die Herstellung konzentrierter wässriger Lösungen von Azofarbstoffen, indem man ein Amin der Formel (8), worin Y Wasserstoff und X₁ Wasserstoff oder Chlor bedeutet, diazotiert und mit einer Kupplungskomponente der Formel (2) kuppelt, worin R₁ Wasserstoff, Methyl oder Chlor, n 2 oder 3, R₂ Wasserstoff, Methyl oder Ethyl und R₃ und R₄ je Methyl und R₅ Methyl, Hydroxy-C₁-C₃-Alkyl, Benzyl oder Amino bedeuten oder worin R₃, R₄ und R₅ zusammen mit dem sie verbindenden Stickstoffatom einen Pyridiniumrest bilden.

Die Diazotierung des Amins der Formel (1) in schwefelsaurer Lösung erfolgt unter an sich bekannten Bedingungen, beispielsweise mit Natriumnitrit und bei Temperaturen von -10 bis 30°C, vorzugsweise von -10 bis 5 °C. Vorzugsweise wird das Amin der Formel (1) durch Zugabe eines Dispergators und/oder Mahlung vor der Diazotierung in eine homogene feinverteilte Suspension überführt.

Die Kupplung des diazotierten Amins mit der Kupplungskomponente der Formel (2) erfolgt ebenfalls in an sich bekannter Weise, beispielsweise bei Temperaturen zwischen -10 und 30°C, vorzugsweise zwischen -5 und 10°C.

Es hat sich als vorteilhaft erwiesen, nach der Kupplung die Reaktionsmischung für einige Zeit, z.B. 0,5 bis 3 Stunden bei erhöhter Temperatur, z.B. 50 bis 95°C zu rühren. Anschliessend kühlt man ab, vorzugsweise auf Raumtemperatur, wobei der Farbstoff als Sulfat oder Hydrogensulfat auskristallisiert.

In einer bevorzugten Ausführungsform des erfindungegemässen Verfahrens arbeitet man bei der Kupplung unter solchen Bedingungen, dass der gebildete Farbstoff als Hydrogensulfat vorliegt. Dies ist normalerweise bei einem pH-Wert unterhalb von etwa 1,5 der Fall.

Der ausgefallene Farbstoff wird anschliessend gewaschen, vorzugsweise mit einer wässrigen, schwefelsauren, Natriumsulfat enthaltenden Lösung.

Anschliessend lässt man auf den Farbstoff ein in Wasser lösliches Bicarbonat einwirken, so dass das Farbstoff-Bicarbonat entsteht. Dazu behandelt man den Farbstoff in wässriger alkalischer Lösung oder Anschlämmung bei einer Temperatur zwischen etwa 0°C und 70°C, vorzugsweise zwischen etwa 10 und 40°C mit einem wasserlöslichen Bicarbonat, vorzugsweise Kalium-, Lithium- oder vor allem Natriumbicarbonat.

Das Bicarbonat wird mindestens in stöchiometrischer Menge, vorzugsweise jedoch im Ueberschuss, z.B. bis zu 20 % Ueberschuss, eingesetzt. Das ausgefallene Farbstoff-Bicarbonat wird anschliessend abfiltriert und eventuell mit einer Bicarbonatlösung und/oder Wasser gewaschen. Falls gewünscht, wird die vorstehend beschriebene Operation wiederholt, d.h. der Farbstoff wird erneut in Wasser gelöst und durch Zusatz eines Bicarbonates ausgefällt und abfiltriert.

Zur Ueberführung in eine konzentrierte wässrige Lösung wird das Farbstoff-Bicarbonat danach in eine organische Säure, ggf. eine wässrige Lösung einer organischen Säure, eingetragen, wo es sich sehr leicht unter Entwicklung von CO₂ löst. Als organische Säuren kommen z.B. Ameisensäure, Essigsäure, Propionsäure, Milchsäure, Oxalsäure, Malonsäure, Bernsteinsäure, Weinsäure, Chloressigsäure oder Methansulfonsäure in Betracht. Bevorzugt unter diesen sind Ameisensäure, Propionsäure, Milchsäure und vor allem Essigsäure.

Die erhaltene Farbstofflösung kann, falls gewünscht, mit Wasser und ggf. weiteren Zusätzen verdünnt werden zur Einstellung einer bestimmten Farbstofkonzentration. Die Lösungen sind sehr gut lagerstabil, d.h. sie zeigen auch bei monatelanger Lagerung bei niedriger Temperatur keinerlei Auskristallisation. Sie sind praktisch chloridfrei und verursachen in üblichen Färbeapparaten keine Korrosion.

Die folgenden Beispiele erläutern die Erfindung, ohne sie einzuschränken. Darin bedeuten Teile Gewichtsteile. Beispiel 1: Zu 450 Teilen Wasser gibt man 2 Teile anionischen Dispergator und 259 Teile 2-Chlor-4-nitroanilin und rührt mit einem schnelldrehenden Rotor-Stator-Mischer bis eine homogene Suspension entsteht.

Zu dieser Suspension gibt man 1 Teil nichtionogenen Dispergator und 670 Teile Eis und dosiert dann innerhalb von 20 Minuten 364 Teile 93 %ige Schwefelsäure zu. Man kühlt durch Aussenkühlung auf -5°C ab, setzt 210 Teile Eis zu und lässt innerhalb von 25 Minuten 260 Teile 40 %ige Natriumnitritlösung zulaufen, wobei man eine Temperatur von etwa 0°C einhält. Man rührt noch eine Stunde bei 0 bis 5°C nach, zerstört dann den Nitritüberschuss durch Zugabe von Sulfaminsäure und führt nach Zusatz eines Filterhilfs-mittels (Kieselgur) eine Klärfiltration durch. Den Rückstand wäscht man mit 250 Teilen Wasser und fügt das Waschwasser zum Klärfiltrat hinzu.

Die erhaltene Diazo-Lösung wird innerhalb von einer Stunde zu einer Lösung von 394 Teilen N-Ethyl-2'(N-ethylanilino)-pyridiniumchlorid und 0,3 Teilen eines nichtionogenen Dispergators in 431 Teilen Wasser und 600 Teilen Eis bei einer Temperatur zwischen O und 5°C zugegeben. Man rührt noch 3 Stunden bei dieser Temperatur, heizt dann innerhalb einer Stunde auf 70 bis 72°C auf und rührt eine weitere Stunde bei dieser Temperatur. Danach kühlt man innerhalb von 2 Stunden auf 25°C ab, filtriert und wäscht den Filterrückstand mit 620 Teilen einer Lösung aus 60 Teilen wasserfreiem Natriumsulfat und 20 Teilen 93 %iger Schwefelsäure in 540 Teilen Wasser. Man erhält 832 Teile eines feuchten Filterkuchens mit einem Farbstoffanteil von ca. 67 % (berechnet als Kation).

Man legt 500 Teile Wasser vor und trägt unter Rühren 89 Teile des vorstehend erhaltenen feuchten Filterkuchens ein. Nach 15 Minuten Rühren bei 20 bis 25°C stellt man durch Zugabe von 30 %iger NaOH-Lösung innerhalb von 15 Minuten einen pH-Wert von 7 bis 8 ein, wobei der Farbstoff vollständig in Lösung geht. Man verdünnt mit 50 Teilen Wasser und gibt innerhalb von 15 Minuten 48 Teile Natriumhydrogencarbonat zu. Dann rührt man 2 Stunden bei 20 bis 25°C, wobei der Farbstoff feinkristallin ausfällt. Es wird über eine Nutsche filtriert, in 450 Teilen Wasser angeschlämmt und erneut wie vorstehend beschrieben als Bicarbonat ausgefällt und abfiltriert.

Der Filterkuchen wird unter Rühren innerhalb von 30 Minuten bei 20 bis 25°C in 60 Teile Eisessig eingetragen noch 2 Stunden bei 20 bis 25°C gerührt und mit 25 Teilen Wasser auf 200 Teile verdünnt.

Man erhält eine klare Farbstofflösung, welche auch bei längerer Lagerung bei 0°C keine Auskristallisation zeigt.

Beispiele 2-4: Nach der im Beispiel 1 beschriebenen Arbeitsweise lassen sich auch konzentrierte wässrige Lösung der folgenden Azofarbstoffe herstellen:

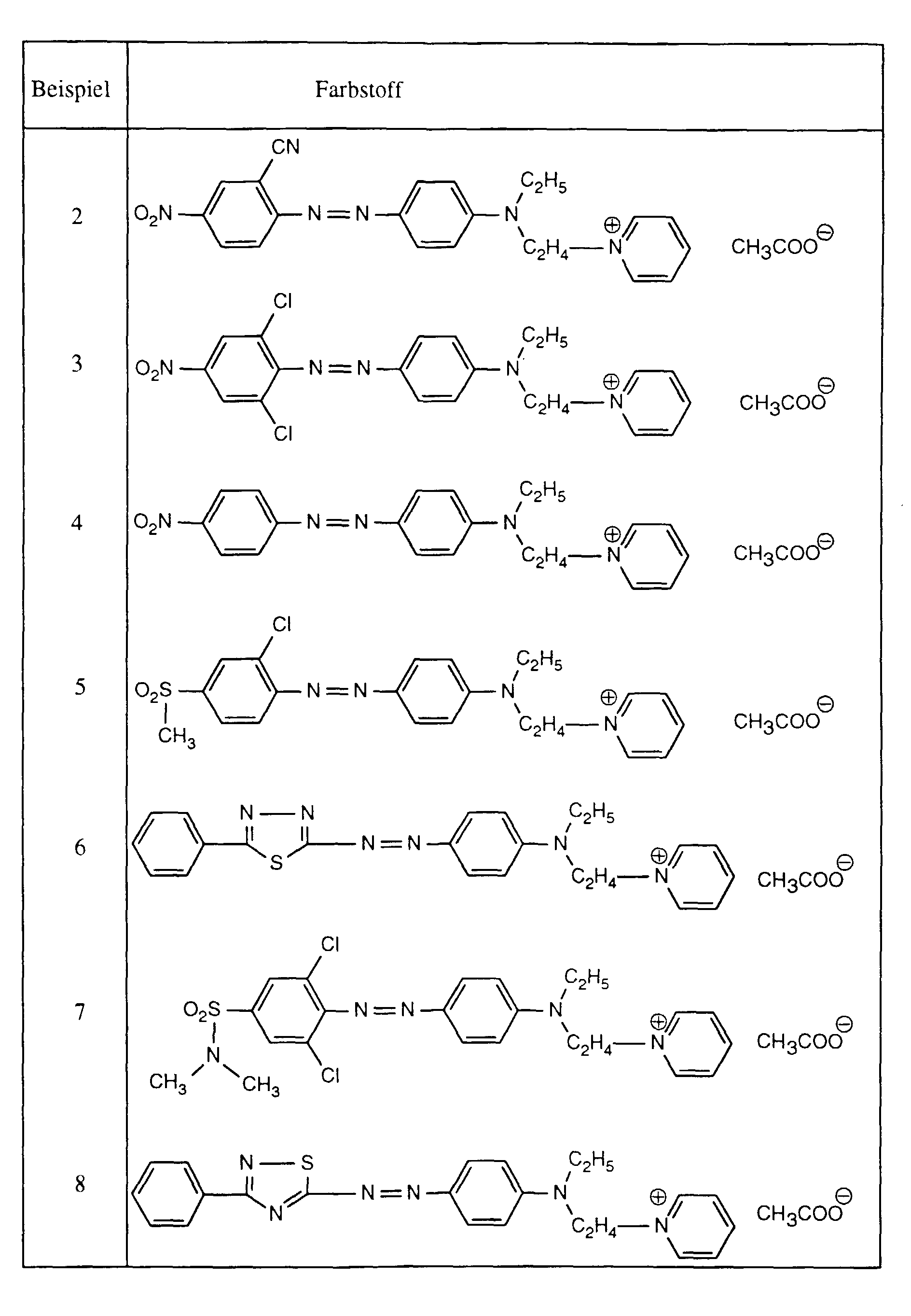

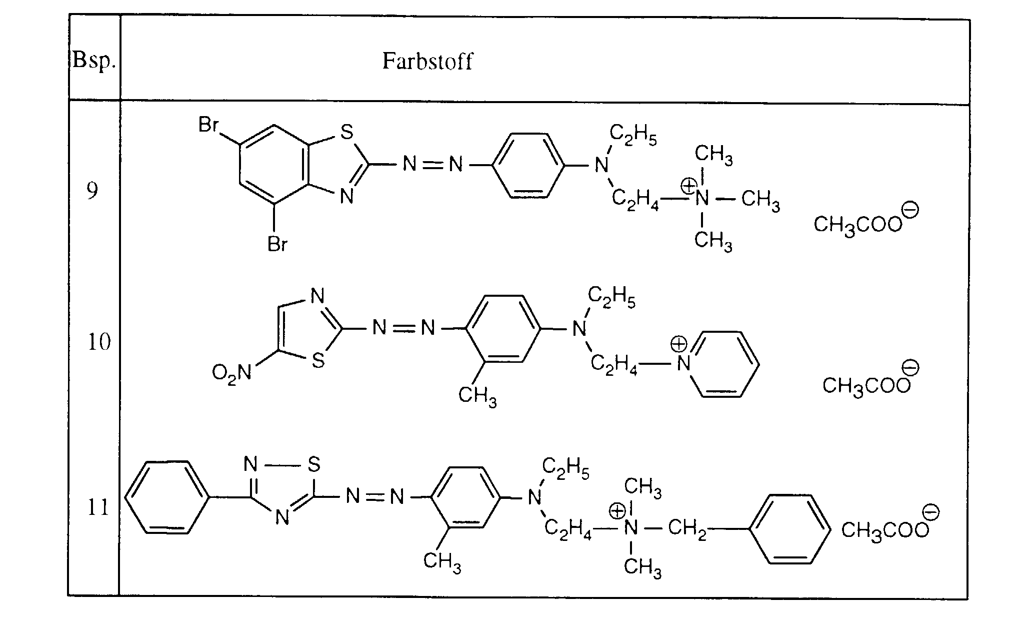

## Patentansprüche

1. Verfahren zur Herstellung hochkonzentrierter wässriger Lösungen von Salzen kationischer Azofarbstoffe, dadurch gekennzeichnet, dass man
a) ein Amin der Formel
D-NH₂ (1)
worin D einen gegebenenfalls substituierten Benzol-, Thiazol-, Benzthiazol- oder Thiadiazolrest bedeutet, in schwefelsaurer Lösung diazotiert, danach
b) mit einer Kupplungskomponente der Formel 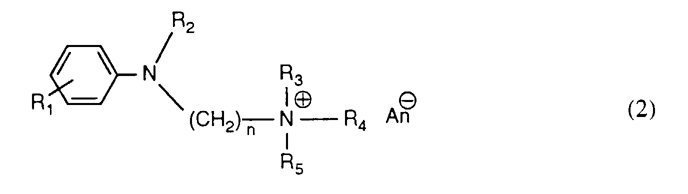 worin
R₁ Wasserstoff, C₁-C₄-Alkyl, C₁-C₄-Alkoxy, Halogen oder C₁-C₄-Alkanoylamino,
R₂ Wasserstoff oder C₁-C₄-Alkyl,
n eine ganze Zahl 2 bis 6,
R₃, R₄ und R₅ unabhängig voneinander gegebenenfalls substituiertes Alkyl oder R₃ und R₄ zusammen mit dem sie verbindenden Stickstoffatom oder R₃, R₄ und R₅ zusammen mit dem sie verbindenden Stickstoffatom einen heterocyclischen Rest, oder R₃ und R₄ je C₁-C₄-Alkyl und R₅ Amino und An^{⊖} ein Anion bedeutet, kuppelt, anschliessend
c) auf den entstandenen Azofarbstoff ein in Wasser lösliches Bicarbonat einwirken lässt und
d) das Farbstoff-Bicarbonat mit einer organischen Säure in das Farbstoff-Salz dieser Säure umwandelt.

2. Verfahren gemäss Anspruch 1, dadurch gekennzeichnet, dass man als Amin ein Anilin der Formel 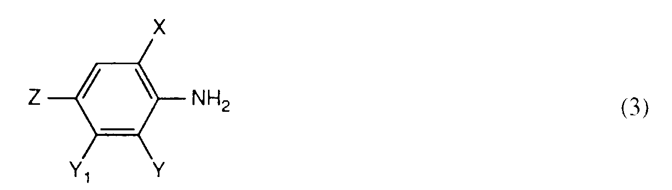 worin
X Wasserstoff, Halogen, Cyan oder Nitro,
Y und Y₁ unabhängig voneinander je Wasserstoff oder Halogen und
Z Nitro, C₁-C₄-Alkylsulfon oder N,N-Di-C₁-C₄-Akylsulfonamid bedeutet,
oder ein Thiazol der Formel 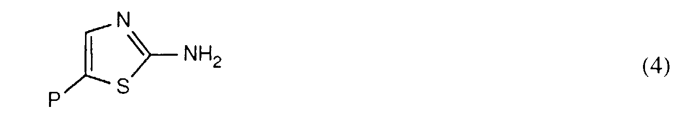 worin P Wasserstoff oder Nitro bedeutet,
oder ein Benzthiazol der Formel 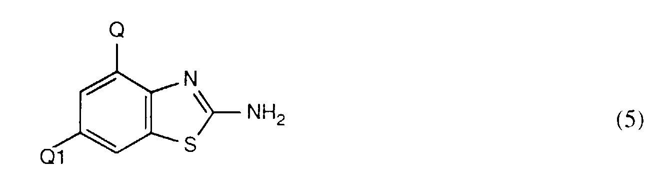 worin Q und Q₁ unabhängig voneinander je Wasserstoff, Halogen oder Nitro bedeuten,
oder ein Thiadiazol der Formel 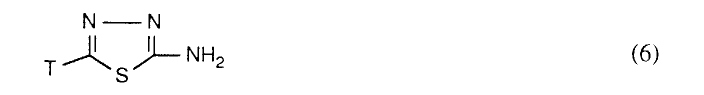 oder 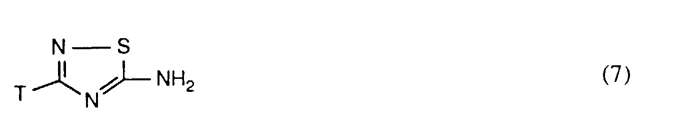 worin T Wasserstoff oder gegebenenfalls substituiertes Phenyl bedeutet, einsetzt.

3. Verfahren gemäss Anspruch 2, dadurch gekennzeichnet, dass man ein Amin der Formel 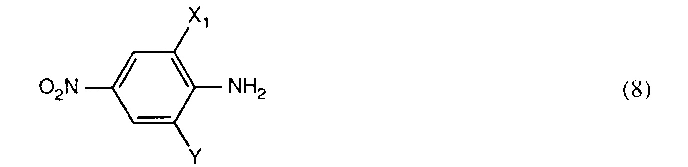 worin
X₁ Wasserstoff, Halogen oder Cyan und
Y Wasserstoff oder Halogen bedeuten, einsetzt.

4. Verfahren gemäss Anspruch 3, dadurch gekennzeichnet, dass man ein Amin der Formel (8) umsetzt, worin Y Wasserstoff und X₁Wasserstoff, Cyan oder vor allem Chlor ist.

5. Verfahren gemäss einem der Ansprüche 1 bis 4, dadurch gekennzeichnet, dass man eine Kupplungskomponente der Formel (2) einsetzt, worin R₁ Wasserstoff, Methyl oder Chlor bedeutet.

6. Verfahren gemäss einem der Ansprüche 1 bis 5, dadurch gekennzeichnet, dass man eine Kupplungskomponente der Formel (2) einsetzt, worin n 2 oder 3 bedeutet.

7. Verfahren gemäss einem der Ansprüche 1 bis 6, dadurch gekennzeichnet, dass man eine Kupplungskomponente der Formel (2) einsetzt, worin R₂ Wasserstoff, Methyl oder vor allem Ethyl ist.

8. Verfahren gemäss einem der Ansprüche 1 bis 7, dadurch gekennzeichnet, dass man eine Kupplungskomponente der Formel (2) einsetzt, worin R₃ und R₄ je Methyl bedeuten.

9. Verfahren gemäss einem der Ansprüche 1 bis 8, dadurch gekennzeichnet, dass man eine Kupplungskomponente der Formel (2) einsetzt, worin R₅ Methyl, Hydroxy-C₁-C₃-Alkyl, Benzyl oder Amino bedeutet.

10. Verfahren gemäss einem der Ansprüche 1 bis 9, dadurch gekennzeichnet, dass man eine Kupplungskomponente der Formel (2) einsetzt, worin R₃, R₄ und R₅ zusammen mit dem sie verbindenden Stickstoffatom einen unsubstituierten oder durch Methyl substituierten Pyridiniumrest bedeuten.

11. Verfahren gemäss Anspruch 1, dadurch gekennzeichnet, dass man ein Amin der Formel (8), worin Y Wasserstoff und X₁ Wasserstoff oder Chlor bedeutet, diazotiert und mit einer Kupplungskomponente der Formel (2) kuppelt, worin R₁ Wasserstoff, Methyl oder Chlor, n 2 oder 3, R₂ Wasserstoff, Methyl oder Ethyl und R₃ und R₄ je Methyl und R₅ Methyl, Hydroxy-C₁-C₃-Alkyl, Benzyl oder Amino bedeuten oder worin R₃, R₄ und R₅ zusammen mit dem sie verbindenden Stickstoffatom einen Pyridiniumrest bilden.

12. Verfahren gemäss einem der Ansprüche 1 bis 11, dadurch gekennzeichnet, dass man in schwefelsaurer Lösung mit Natriumnitrit diazotiert bei einer Temperatur zwischen -10 und 5 °C.

13. Verfahren gemäss einem der Ansprüche 1 bis 12, dadurch gekennzeichnet, dass man die Kupplung bei einer Temperatur zwischen -10 und 30°C durchführt und anschliessend die Reaktionsmischung während 0,5 bis 3 Stunden auf 50 bis 95°C erhitzt.

14. Verfahren gemäss einem der Ansprüche 1 bis 13, dadurch gekennzeichnet, dass man die Kupplung unter solchen Reaktionsbedingungen durchführt, dass der bebildete Farbstoff als Hydrogensulfat vorliebt.

15. Verfahren gemäss einem der Ansprüche 1 bis 14, dadurch gekennzeichnet, dass man den Azofarbstoff durch Zugabe von Natriumbicarbonat ausfällt.

16. Verfahren gemäss einem der Ansprüche 1 bis 15, dadurch gekennzeichnet, dass man das Farbstoff-Bicarbonat in einer organischen Säure, gegebenenfalls in einer wässrigen Lösung einer organischen Säure, löst, wobei als Säure Ameisensäure, Propionsäure, Milchsäure oder vor allem Essigsäure verwendet wird.

## Claims

1. A process for the preparation of highly concentrated aqueous solutions of salts of cationic azo dyes, which comprises
a) diazotising an amine of formula
D-NH₂ (1)
wherein D is an unsubstituted or substituted benzene, thiazole, benzothiazole or thiadiazole radical, in a solution which contains sulfuric acid, and subsequently
b) coupling the diazotised amine with a coupling component of formula 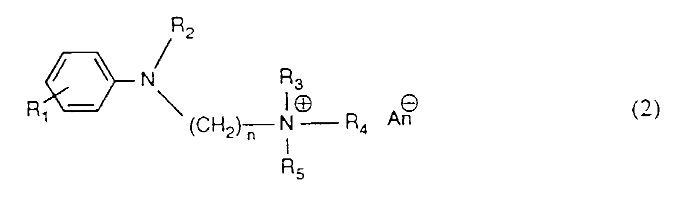 wherein
R₁ is hydrogen, C₁-C₄alkyl, C₁-C₄alkoxy, halogen or C₁-C₄alkanoykamino,
R₂ is hydrogen or C₁-C₄alkyl,
n is an integer from 2 to 6,
R₃, R₄ and R₅ are each independently of one another unsubstituted or substituted alkyl or R₃ and R₄, together with the linking nitrogen atom or R₃, R₄ and R₅, together with the linking nitrogen atom, form a heterocyclic radical, or R₃ and R₄ are each C₁-C₄alkyl and R₅ is amino, and An^{⊖} is an anion, and then
c) treating the resultant azo dye with a water-soluble bicarbonate, and
d) converting the dye bicarbonate with an organic acid into the dye salt of said acid.

2. A process according to claim 1, wherein the amine employed is an aniline of formula 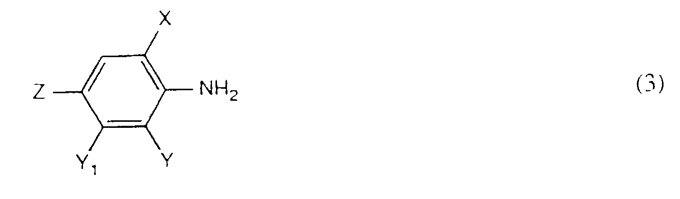 wherein
X is hydrogen, halogen, cyano or nitro,
Y and Y₁ are each independently of the other hydrogen or halogen, and
Z is nitro, C₁-C₄alkyl sulfone or N,N-di-C₁-C₄-alkylsulfonamide,
or a thiazole of formula 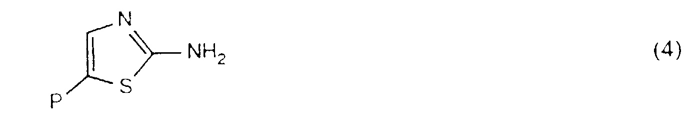 wherein P is hydrogen or nitro,
or a benzothiazole of formula 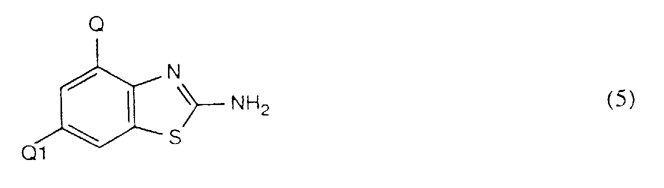 wherein Q and Q₁ are each independently of the other hydrogen, halogen or nitro,
or a thiadiazole of formula 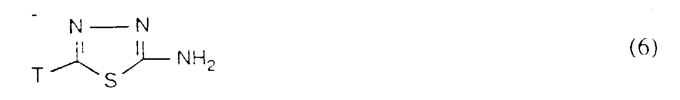 or 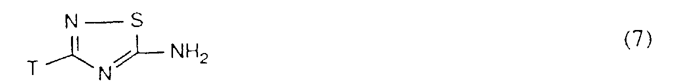 wherein T is hydrogen or unsubstituted or substituted phenyl.

3. A process according to claim 2, which comprises using an amine of formula 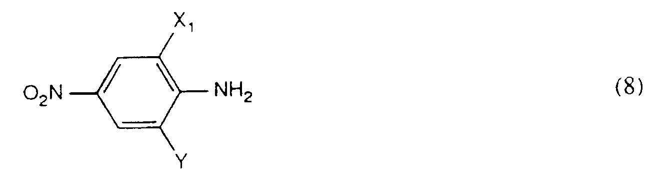 wherein
X₁ is hydrogen, halogen or cyano, and
Y is hydrogen or halogen.

4. A process according to claim 3, which comprises reacting an amine of formula (8) wherein Y is hydrogen and X₁ is hydrogen, cyano or, preferably, chloro.

5. A process according to any one of claims 1 to 4, which comprises using a coupling component of formula (2) wherein R₁ is hydrogen, methy or chloro.

6. A process according to any one of claims 1 to 5, which comprises using a coupling component of formula (2) wherein n is 2 or 3.

7. A process according to any one of claims 1 to 6, which comprises using a coupling component of formula (2) wherein R₂ is hydrogen, methyl or, preferably, ethyl.

8. A process according to any one of claims 1 to 7, which comprises using a coupling component of formula (2) wherein R₃ and R₄ are each methyl.

9. A process according to any one of claims 1 to 8, which comprises using a coupling component of formula (2) wherein R₅ is methyl, hydroxy-C₁-C₃alkyl, benzyl or amino.

10. A process according to any one of claims 1 to 9, which comprises using a coupling component of formula (2) wherein R₃, R₄ and R₅, together with the linking nitrogen atom, are an unsubstituted or methyl-substituted pyridinium radical.

11. A process according to claim 1, which comprises diazotising an amine of formula (8) wherein Y is hydrogen and X₁ is hydrogen or chloro and coupling the diazotised amine with a coupling component of formula (2) wherein R₁ is hydrogen, methyl or chloro, n is 2 or 3, R₂ is hydrogen, methyl or ethyl and R₃ and R₄ are each methyl and R₅ is methyl, hydroxy-C₁-C₃alkyl, benzyl or amino, or wherein R₃, R₄ and R₅, together with the linking nitrogen atom, form a pyridinium radical.

12. A process according to any one of claims 1 to 11, which comprises carrying out the diazotisation with sodium nitrite in a solution which contains sulfuric acid at a temperature between -10 and 5°C.

13. A process according to any one of claims 1 to 12, which comprises carrying out the coupling at a temperature between -10 and 30°C and subsequently heating the reaction mixture for 0.5 to 3 hours at 50 to 95°C.

14. A process according to any one of claims 1 to 13, which comprises carrying out the coupling under such reaction conditions that the dye is obtained in the form of the hydrogen sulfate.

15. A process according to any one of claims 1 to 14, wherein the azo dye is precipitated by addition of sodium bicarbonate.

16. A process according to any one of claims 1 to 15, which comprises dissolving the dye bicarbonate in an organic acid, optionally in an aqueous solution of an organic acid, the acid used being formic acid, propionic acid, lactic acid or, preferably, acetic acid.

## Revendications

1. Procédé de préparation de solutions aqueuses hautement concentrées de sels de colorants azoïques cationiques, caractérisé en ce que l'on procède
a) à la diazotation d'une amine de formule
(1) D-NH₂
dans laquelle D est un résidu benzène, thiazole, benzothiazole ou thiadiazole éventuellement substitué, dans une solution d'acide sulfurique, ensuite
b) à la copulation avec un copulant de formule 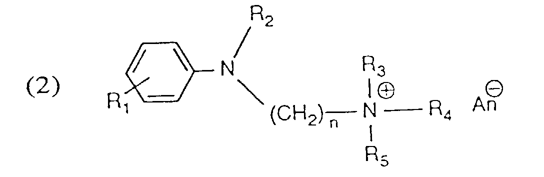 dans laquelle
R₁ est un atome d'hydrogène, un groupe alkyle en C₁₋₄, alcoxy en C₁₋₄, halogéno ou alcanoylamino en C₁₋₄,
R₂ représente un atome d'hydrogène ou un groupe alkyle en C₁₋₄, n est un nombre entier compris entre 2 et 6,
R₃, R₄ et R₅ représentent indépendamment un groupe alkyle éventuellement substitué, ou alors R₃ et R₄ ou R₃, R₄ et R₅ forment, en conjonction avec l'atome d'azote auquel ils sont liés, un résidu hétérocyclique, ou R₃ et
R₄ représentent chacun un groupe alkyle en C₁₋₄ et R₅ un résidu amino et An⁻ un anion, puis
c) au traitement du colorant azoïque formé avec un hydrogénocarbonate hydrosoluble, et
d) à la conversion de la forme hydrogénocarbonate du colorant par un acide organique en sel d'addition d'acide du colorant.

2. Procédé conforme à la revendication 1, caractérisé en ce que l'on utilise, comme amine, une aniline de formule 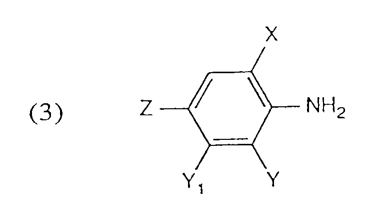 dans laquelle
X est un atome d'hydrogène ou d'halogène, un groupe cyano ou nitro,
Y et Y₁ représentent indépendamment l'un de l'autre un atome d'hydrogène ou d'halogène, et
Z est un groupe nitro, (alkyle en C₁₋₄)sulfone ou N,N-di(alkyle en C₁₋₄)sulfonamide,
ou un thiazole de formule 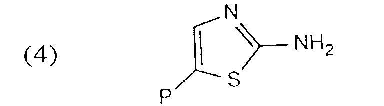 dans laquelle P est un atome d'hydrogène ou un groupe nitro, ou un benzothiazole de formule 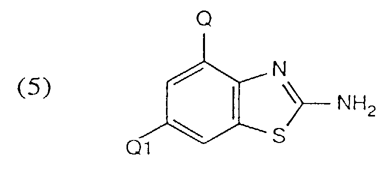 dans laquelle Q et Q₁ représentent indépendamment l'un de l'autre un atome d'hydrogène, d'halogène ou un groupe nitro,
ou un thiadiazole de formule 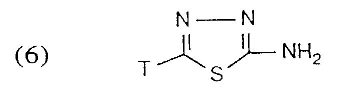 ou 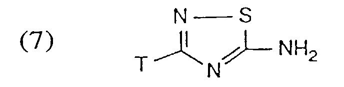 dans lesquelles T est un atome d'hydrogène ou un groupe phényle éventuellement substitué.

3. Procédé conforme à la revendication 2, caractérisé en ce que l'on utilise une amine de formule 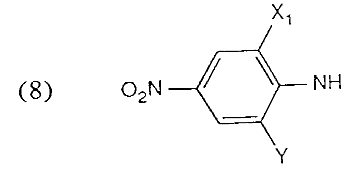 dans laquelle
X₁ est un atome d'hydrogène, un atome d'halogène ou un groupe cyano, et
Y est un atome d'hydrogène ou d'halogène.

4. Procédé conforme à la revendication 3, caractérisé en ce que l'on fait réagir une amine de formule (8) dans laquelle Y est un atome d'hydrogène et X₁ un atome d'hydrogène, un groupe cyano ou surtout un atome de chlore.

5. Procédé conforme à une des revendications 1 à 4, caractérisé en ce que l'on utilise un copulant de formule (2) dans laquelle R₁ représente un atome d'hydrogène, un groupe méthyle ou un atome de chlore.

6. Procédé conforme à une des revendications 1 à 5, caractérisé en ce que l'on utilise un copulant de formule (2) dans laquelle n vaut 2 ou 3.

7. Procédé conforme à une des revendications 1 à 6, caractérisé en ce que l'on utilise un copulant de formule (2) dans lequel R₂ représente un atome d'hydrogène, un groupe méthyle ou surtout un groupe éthyle.

8. Procédé conforme à une des revendications 1 à 7, caractérisé en ce que l'on utilise un copulant de formule (2) dans laquelle R₃ et R₄ représentent chacun un groupe méthyle.

9. Procédé conforme à une des revendications 1 à 8, caractérisé en ce que l'on utilise un copulant de formule (2) dans laquelle R₅ est un groupe méthyle, hydroxy(alkyle en C₁₋₃), benzyle ou amino.

10. Procédé conforme à une des revendications 1 à 9, caractérisé en ce que l'on utilise un copulant de formule (2) dans laquelle R₃, R₄ et R₅ forment, conjointement avec l'atome d'azote auquel ils sont liés, un résidu pyridinium non substitué ou portant un substituant méthyle.

11. Procédé conforme à la revendication 1, caractérisé en ce que l'on procède à la diazotation d'une amine de formule (8), dans laquelle Y représente un atome d'hydrogène et X₁ un atome d'hydrogène ou de chlore, en ce que l'on effectue la copulation avec un copulant de formule (2) dans laquelle R₁ est un atome d'hydrogène, un groupe méthyle ou un atome de chlore, n vaut 2 ou 3, R₂ est un atome d'hydrogène, un groupe méthyle ou éthyle, et R₃ et R₄ représentent chacun un groupe méthyle et R₅ un groupe méthyle, hydroxy(alkyle en C₁₋₃), benzyle ou amino, ou dans laquelle R₃, R₄ et R₅ forment, conjointement avec l'atome d'azote auquel ils sont liés, un résidu pyridinium.

12. Procédé conforme à une des revendications 1 à 11, caractérisé en ce que la diazotation est effectuée dans une solution d'acide sulfurique contenant du nitrite de sodium à une température comprise entre -10 °C et 5 °C.

13. Procédé conforme à une des revendications 1 à 12, caractérisé en ce que l'on effectue la copulation à une température comprise entre -10 et 30 °C et en ce que l'on chauffe ensuite le mélange réactionnel pendant 0,5 à 3 heures à une température comprise entre 50 et 95 °C.

14. Procédé conforme à une des revendications 1 à 13, caractérisé en ce que l'on effectue la copulation dans des conditions réactionnelles telles que le colorant formé se présente sous forme d'hydrogénosulfate.

15. Procédé conforme à une des revendications 1 à 14, caractérisé en ce que l'on fait précipiter le colorant azoïque par addition d'hydrogénocarbonate de sodium.

16. Procédé conforme à une des revendications 1 à 15, caractérisé en ce que l'on dissout la forme hydrogénocarbonate du colorant dans un acide organique, éventuellement dans une solution aqueuse d'un acide organique, les acides utilisés étant l'acide formique, l'acide propionique, l'acide lactique ou surtout l'acide acétique.
